# FASCICULE DE BREVET EUROPEEN

(11) **EP 3 227 142 B1**
(45) Date de publication et mention de la délivrance du brevet: **11.11.2020**
(21) Numéro de dépôt: 15817448.2
(22) Date de dépôt: 23.11.2015
(51) Int. Cl.: B60Q 1/48

(54) **DISPOSITIF D'ÉCLAIRAGE ET/OU DE SIGNALISATION MOBILE D'ACCUEIL POUR VÉHICULE AUTOMOBILE ASSOCIÉ À LA LOCALISATION DU VÉHICULE**
BEWEGLICHE EINSTIEGSBELEUCHTUNGS- UND/ODER ANZEIGEVORRICHTUNG FÜR EIN KRAFTFAHRZEUG IM ZUSAMMENHANG MIT FAHRZEUGPOSITIONIERUNG
MOVEABLE COURTESY LIGHTING AND/OR INDICATING DEVICE FOR A MOTOR VEHICLE ASSOCIATED WITH VEHICLE POSITIONING

(30) Priorité: 03.12.2014 FR 1461832
(43) Date de publication de la demande: 11.10.2017
(73) Titulaire: PSA Automobiles SA, 78300 Poissy (FR)
(72) Inventeur: LE DALL, Christophe, 92150 Suresnes (FR); GACOIN, Nicolas, 91380 Chilly Mazarin (FR); GONCALVES, Whilk Marcelino, 75013 Paris (FR)
(86) Numéro de dépôt international: PCT/FR2015/053174
(87) Numéro de publication internationale: WO 2016/087744

(56) Documents cités:
- EP-A1- 2 799 286
- WO-A1-2014/054020
- DE-U1-202005 017 408
- US-B1- 6 580 368

## Description

La présente invention est relative à un dispositif permettant d'assurer l'illumination de la zone qui entoure notamment l'avant d'un véhicule automobile à l'arrêt.

Le document EP 2 799 286 A1 décrit un projecteur de véhicule automobile comprenant un module d'éclairage tournant présentant plusieurs faces ayant des fonctions distinctes.

L'invention se rapporte plus particulièrement à un dispositif d'éclairage et/ou de signalisation mobile (dynamique) permettant d'assurer une illumination de ladite zone en réaction à une commande d'une fonction de gestion d'accès au véhicule souhaitée par le conducteur.

Une fonction d'accès porte notamment sur la localisation à distance du véhicule par exemple quand le conducteur cherche son véhicule qui est en stationnement à l'extérieur ou dans parking souterrain.

Cette localisation précède généralement la commande d'ouverture des ouvrants (portes, vitres, coffre, trappe à essence, ...) du véhicule.

Les véhicules actuels disposent en règle générale, monté en série, d'un système de signalisation temporisée, qui provoque l'allumage simultané des quatre feux indicateurs de changement de direction (clignotants) suivant une fréquence de clignotement déterminée, généralement plus rapide que celle de la fonction feux de détresse et avec une temporisation de quelques secondes.

L'inconvénient d'un tel allumage temporisé des clignotants est que, ni l'orientation de l'éclairement fourni, ni la puissance de celui-ci, ne sont modifiables.

On connait également du document FR2797614, un dispositif d'éclairage et/ou de signalisation agencé à l'intérieur du projecteur pour adopter plusieurs configurations d'éclairage.

Le dispositif d'éclairage comprend à cet effet, un équipage mobile autour d'axes parallèles orientés en Z.

L'équipage mobile comprend trois rangées de trois modules d'éclairage et/ou de signalisation aptes à se déplacer en rotation autour de leurs axes de rotation respectifs parallèles suivant Z.

Chaque rangée de modules participe à la création d'un faisceau lumineux qui coopère les unes avec les autres pour former un faisceau lumineux global adaptable en fonction des conditions d'utilisation du véhicule.

Le système d'entraînement des modules comprend un mécanisme d'entraînement à base de bielle(s) tel que décrit, notamment, dans le document FR2797677.

L'amplitude de rotation des modules tournants est limitée à 45° de part et d'autre d'un axe parallèle à la direction longitudinale du véhicule.

La présente invention propose une fonction d'éclairage qui met en scène différents modules tournants avec une grande diversité tant dans les mouvements/cinématique des modules tournants que dans l'intensité et/ou la couleur de l'éclairage des modules tournants.

Pour cela, la présente invention repose sur une succession de petites rotations rapides, synchrones, de l'ordre de quelques degrés par exemple 7°, dans un sens puis dans l'autre, des modules tournants autour de leurs axes de rotation respectifs répondant à des lois de commande déterminées et qui respectent la réglementation relative à l'éclairage automobile.

Avantageusement, l'intensité et la couleur de l'éclairage de chaque module peuvent varier en accord avec l'ambiance lumineuse intérieure du véhicule.

Les différentes animations permettent ainsi à la fois d'offrir une confirmation optimale de la prise en compte des commandes de gestion d'accès du véhicule, par le véhicule, et une mise en valeur du véhicule en termes d'attractivité et d'identité de la marque du véhicule.

A cet effet la présente invention a pour premier objet un dispositif d'éclairage et/ou de signalisation d'un véhicule automobile tel que défini dans la revendication 1.

Selon une caractéristique, il comporte en outre au moins un deuxième module tournant, éventuellement adjacent au premier module tournant ; l'organe de command commandant, de manière synchrone, les rotations de chaque premier et deuxième modules tournants.

Selon une autre caractéristique, il comporte au moins une deuxième source de lumière apte à générer un faisceau lumineux en direction de la deuxième face des premier et deuxième modules tournants ; ladite source de lumière étant apte à générer une lumière à couleur changeante.

La présente invention a pour deuxième objet, un projecteur de véhicule automobile comportant un boitier, caractérisé en ce que ledit boitier supporte à rotation des modules tournants d'un dispositif tel que décrit ci-dessus.

La présente invention a pour troisième objet un procédé de commande d'un dispositif d'éclairage et/ou de signalisation tel que décrit ci-dessus, caractérisé en ce qu'il consiste, en début du cycle de durée déterminée, à commander une première rotation du au moins premier module tournant d'un angle d'au moins 180° autour de son axe de rotation suivant un premier sens de rotation avec une première vitesse de rotation, puis à la fin de la première rotation du premier module tournant, à commander une succession d'au moins deux rotations, dans un sens puis dans l'autre, du premier module tournant avec une deuxième vitesse de rotation inférieure à la première, et à commander une deuxième rotation du au moins premier module d'un angle d'au moins 180° selon un deuxième sens de rotation, opposé au premier sens de rotation et avec la même première vitesse de rotation quand le premier module a terminé sa succession de deux rotations ; le premier module tournant présentant à la fin du cycle de durée sa deuxième face de manière visible de l'extérieur du véhicule.

Selon une caractéristique, il consiste à commander une diminution progressive de l'intensité de l'éclairage et/ou de signalisation à la fin de la période déterminée.

Selon une autre caractéristique, il consiste à commander une diminution progressive de l'intensité de l'éclairage et/ou de signalisation à la fin de la période déterminée, en fonction de la diminution progressive de l'intensité de l'éclairage d'ambiance intérieur du véhicule.

Selon une autre caractéristique, il consiste à commander un changement de couleur de l'éclairage et/ou de signalisation en fonction d'un changement de couleur d'un éclairage d'ambiance intérieur du véhicule.

L'effet de clignotement connu de l'état de l'art est ici remplacé par des balayages rapides, de gauche vers la droite et de droite vers la gauche (ou inversement), de l'éclairage et/ou signalisation, en azimut, dans la zone entourant le véhicule, créant pour le conducteur à la recherche de son véhicule, une impression selon laquelle le véhicule recherche son propriétaire.

D'autres caractéristiques et avantages d'un dispositif selon l'invention, apparaîtront encore à travers la description qui suit d'un exemple de réalisation, donné à titre indicatif et non limitatif, en référence au dessin annexé sur lequel :
- la figure 1 est une vue en perspective montrant un véhicule automobile équipé de projecteurs intégrant un dispositif d'éclairage et/ou de signalisation mobile selon l'invention ;
- la figure 2 est une section dans le plan horizontal XY, schématique, en vue de dessus, illustrant le dispositif d'éclairage et/ou de signalisation mobile selon l'invention comportant trois modules mobile en rotation autour de l'axe Z ;
- la figure 3 illustre, schématiquement, une section transversale d'un des deux projecteurs (suivant X) passant par l'axe d'un des modules tournants selon l'invention, dans une position d'illumination de la zone avant du véhicule ;
- la figure 4 illustre un exemple d'animation visuelle d'un dispositif d'éclairage et/ou de signalisation selon l'invention,
- la figure 5 illustre les chronogrammes des vitesses de rotation (angle vs temps) des modules et intensité lumineuse (% intensité fonction d'éclairage vs temps) correspondant à l'animation illustrée à la figure 4 ;
- la figure 6 illustre un scénario dans lequel la position des modules tournants est inconnue a priori ;
- la figure 7 illustre le chronogramme associé au scénario de la figure 6 ; et
- la figure 8 donne la légende des symboles utilisés dans les figures 4 et 6.

On définit par rapport au véhicule 1 (et donc par rapport au projecteur 2) un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Le projecteur 2 comporte un boîtier 21 dont la face 22 externe comporte une courbure déterminée pour former avec les parties de carrosserie avoisinantes 40 (capot et aile) une continuité de forme contribuant à l'esthétisme de la face avant du véhicule 1.

Le dispositif 3 d'éclairage est agencé à l'intérieur du projecteur 2 pour adopter plusieurs configurations d'éclairage.

Le dispositif 3 d'éclairage comprend à cet effet, un équipage 5 mobile autour d'axes parallèles orientés en Z et comprend un module d'éclairage principal statique 6 assurant le niveau d'intensité réglementaire suivant l'axe longitudinal X du véhicule 1.

L'équipage 5 mobile comprend trois modules 51-53 d'éclairage et/ou de signalisation tournants aptes à se déplacer en rotation de plus ou moins 180° dans un sens et de plus ou moins 180° dans l'autre sens autour de leurs axes de rotation respectifs parallèles suivant Z.

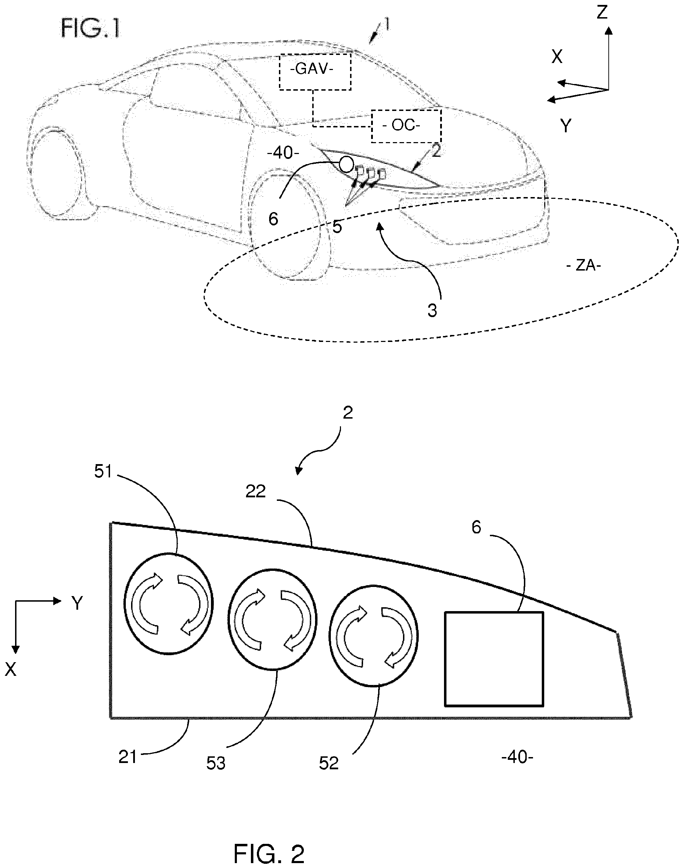

Les trois modules 51-53 sont disposés à proximité de l'aile avant droite 40 du véhicule 1 (à gauche du module d'éclairage principal 6, en considérant le projecteur avant droit 2 de la figure 2).

Ils sont disposés à égale distance les uns des autres à l'intérieur du projecteur 2 et leurs axes de rotation respectifs parallèles entre eux suivant Z, sont alignés suivant sensiblement un arc de cercle dont le rayon correspond sensiblement au rayon de courbure de la face externe 22 du projecteur 2 : le premier module référencé 51 est celui qui est le plus éloigné du module d'éclairage principal 6 fixe, le deuxième module référencé 52 est celui qui en est le plus proche (le plus à l'extérieur du véhicule 1) ; le troisième module référencé 53 est disposé entre les premier et deuxième modules 51 et 52.

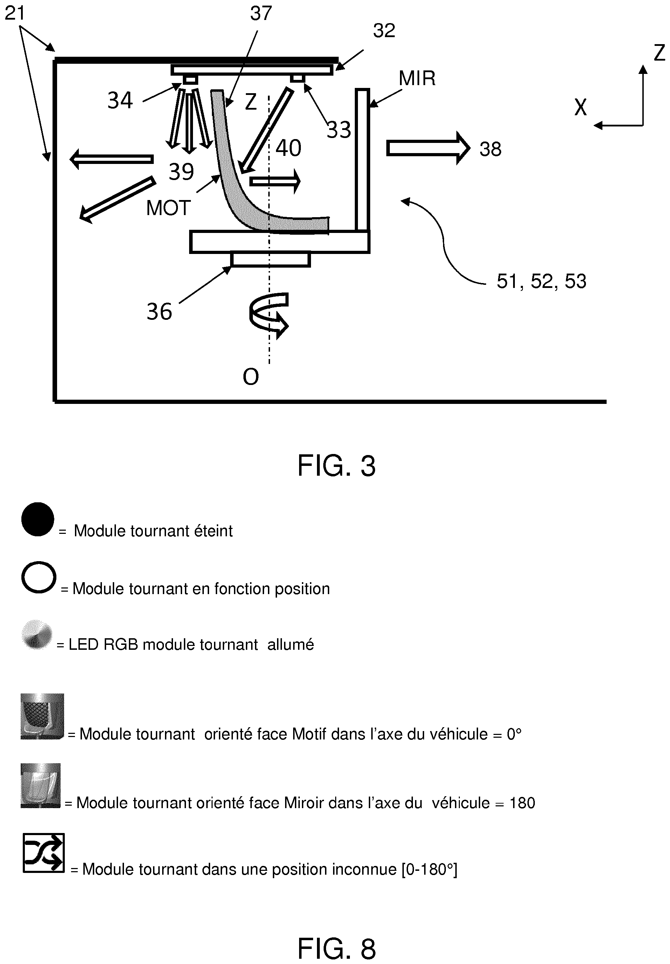

La figure 3 illustre un projecteur 2 selon l'invention, suivant une vue en coupe schématique, transversale, du projecteur 2 (suivant X), passant par le centre d'un des trois module tournants 51-52.

Chacun des trois modules tournants 51-53 comprend une monture définissant un plateau tournant 36 de forme générale cylindrique, monté à rotation sur le boitier 21 autour d'un axe vertical OZ.

Le plateau tournant 36 supporte sur sa face supérieure, un réflecteur 35 centrée sur l'axe OZ et solidaire du plateau 36. La face avant du réflecteur 35 définit une surface réfléchissante 37 de forme générale parabolique apte à réfléchir un faisceau lumineux émis par une première source de lumière 33, dite secondaire, comportant une ou plusieurs diode(s) électroluminescente(s) ou LEDs, aptes à générer une lumière blanche, dites LEDs blanches.

La ou les LEDs blanches 33 sont disposées sur un support fixe 32 par rapport au boiter 21, disposé en regard de la surface réfléchissante 37. Le support 32 est notamment une plaque de circuit imprimé (ou Printed Circuit Board - PCB) s'étendant parallèlement à la surface supérieure du plateau 36.

Le plateau 36 supporte en outre une lentille de projection 31, solidaire du plateau 36, s'étendant en regard de la surface réfléchissante 37 ; ladite lentille de projection 31 définissant une portion de paroi latérale cylindrique centrée dans le plan de coupe XZ. La lentille de projection 31 s'étend perpendiculairement au bord périphérique de la surface supérieure du plateau 36 supportant le réflecteur 35.

La lentille de projection 31 participe avec le réflecteur 35 à la projection du faisceau lumineux 40 vers l'extérieur du boitier 2, à l'avant 38 du véhicule 1.

La lentille 31 est réalisée, par exemple, dans un matériau transparent. Il s'agit de préférence d'une matière plastique synthétique, par exemple un polyacrylate, qui offre l'avantage d'offrir de bonnes propriétés optiques (notamment une bonne transparence) et mécaniques (notamment une bonne rigidité).

Le support PCB 32 supporte également une seconde source de lumière secondaire 34 disposée en aplomb de la face arrière du réflecteur 35.

Cette seconde source de lumière secondaire 34 est utilisée pour produire un rétro-éclairage 39 de lumière colorée, fixe ou changeante, vers les parois internes du boitier 21, masques ou d'autres parties appartenant au ou rapportées dans le boitier 21 ainsi que sur la face arrière du réflecteur 35.

Cette source de lumière colorée est obtenue à partir d'une diode électroluminescente particulière (LED en reprenant l'acronyme anglo-saxon) constituée de trois LEDs élémentaires de couleurs respectives rouge, verte et bleue (RGB en reprenant l'acronyme anglo-saxon), d'où la désignation de LED RGB, apte à produire un éclairage de couleurs changeantes obtenu par mélange des trois couleurs suivant les alimentations respectives des trois LEDs de couleur.

La face arrière du réflecteur 35 est recouverte d'un motif permettant d'identifier la marque du véhicule 1.

On désignera par la suite la face arrière du réflecteur 35, porteuse du motif par « face motif » MOT et la face avant du réflecteur 35, vue à travers la lentille de projection 31, par « face miroir » MIR.

Le motif peut être soit sérigraphié sur la face arrière du réflecteur 35 soit obtenu par grattage local de la face arrière. Il peut être également réalisé sur une coque rapportée sur la face arrière du réflecteur 35.

Une seconde lentille, non représentée, peut être disposée en regard de la face motif MOT et être supportée de la même manière que la lentille de projection 31 sur le plateau tournant 36.

Cette seconde lentille n'aura pas la même fonction optique que celle de la lentille de projection 31 mais sa tranche pourra être utilisée comme guide de lumière pour une lumière blanche émise par une autre source de lumière blanche non représentée qui serait disposée par exemple au voisinage de la LED RGB.

L'éclairage de la tranche aura pour effet de souligner la face motif MOT donc de la mettre en valeur.

Les deux faces (face motif MOT et face miroir MIR) sont donc disposées à 180° l'une de l'autre, ce qui signifie que pour passer d'une configuration dans laquelle la face miroir MIR est orientée vers l'arrière du boitier 21 (vers l'arrière du véhicule 1) à une configuration où cette même face MIR est orientée vers l'avant du véhicule 1, il faut faire tourner le module 51-53 d'un demi-tour (180°) autour de son axe de rotation OZ dans un sens ou dans l'autre (et réciproquement quand c'est la face motif MOT qui est exposée vers l'arrière du véhicule 1) .

Dans la configuration illustrée à la figure 3, le module tournant 51-53 est orienté avec sa face miroir MIR vers l'avant du véhicule 1 ; sa face motif MOT étant orientée vers le fond du boitier 21 du projecteur 2 (vers l'arrière du véhicule 1).

Les sources de lumières secondaires, blanches 33 ou colorées 34, peuvent être commandées indépendamment l'unes des autres ou conjointement. L'agencement des sources secondaires 33 et 34 sur leur support 32 PCB par rapport au réflecteur 35 et l'agencement du réflecteur 35 par rapport au support PCB 32 sont déterminés de manière à ce que les deux éclairages 39 et 40 soient de préférence confinés dans leurs zones d'éclairement respectives. A cet effet, la partie supérieure du réflecteur 35 est dimensionnée pour arriver au voisinage de la plaque support PCB 32 et servir de cloison pour les deux compartiments d'éclairage avant 40 et arrière 39.

Le système d'entraînement des modules tournants 51-53, non représenté, peut comprendre de manière connue, un mécanisme à base de bielle(s), cames et/ou d'engrenages, couplé aux modules tournants 51-53 pour assurer leur rotation de manière indépendante ou conjointe et/ou complémentaire avec des vitesses de rotation différentes.

Le système d'entraînement comprend, en outre, une motorisation telle qu'un moteur pas à pas, couplée au mécanisme et commandée par un organe de commande OC apte à commander les modules tournants 51-53 pour les faire tourner à différentes vitesses.

Le module d'éclairage principal 6 comporte de manière connue une source lumineuse apte à assurer l'éclairage principal du véhicule 1 dans l'axe longitudinal (selon X) du véhicule 1, par exemple une ampoule à gaz (typiquement halogène ou au xénon), ou encore à diode(s) électroluminescente(s) ou LED.

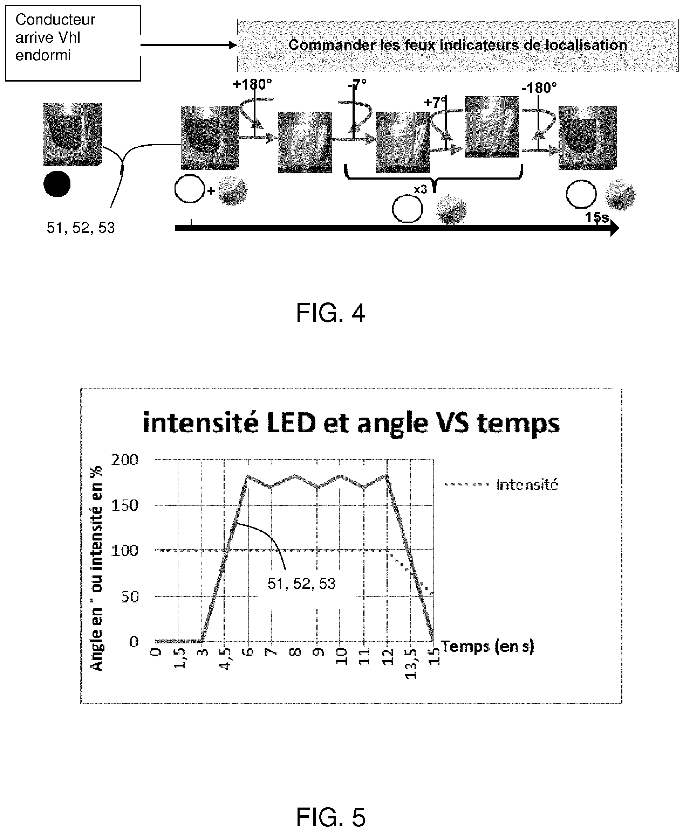

La figure 4 illustre un exemple de séquence d'animation visuelle d'une fonction d'éclairage et/ou de signalisation suite à une demande ou commande d'activation des feux indicateurs de localisation du véhicule.

La figure 5, illustre des chronogrammes du cycle de l'animation pour une telle demande.

La situation initiale est la suivante :

Les trois modules tournants 51-53 sont éteints et présentent leurs faces motif MOT vers l'avant du véhicule.

Le conducteur recherche son véhicule 1 qui est endormi (véhicule moteur arrêté) et active la fonction de localisation du véhicule par exemple via son plip.

A réception du signal par l'organe de gestion d'accès GAV du véhicule, hébergé par exemple dans le calculateur habitacle, ce dernier active l'organe de commande OC pour débuter l'animation conformément à la loi de commande illustrée par le chronogramme de la figure 5.

Le cycle de l'animation débute. Les trois modules tournants 51-53 initient un cycle de rotations synchrones en associant des lumières blanches 40 générées par les premières sources de lumière secondaires 33 aux lumières à couleurs changeantes 39 générées par les secondes sources de lumière secondaires 34.

Au début de l'animation (t=0), les modules tournants 51-53 sont tous orientés avec leur face motif MOT vers l'avant du véhicule 1.

L'effet recherché par l'animation visuelle est de créer une impression visuelle selon laquelle le conducteur a l'impression que son véhicule le cherche, par analogie avec les mouvements de la tête de quelqu'un qui cherche quelque chose ou quelqu'un.

Un seul module tournant par projecteur peut suffire pour obtenir cet effet.

On peut par ailleurs synchroniser le module tournant du projecteur gauche avec celui du projecteur droit.

L'effet est plus attractif à partir d'au moins deux modules par projecteur voire trois.

Ainsi, en considérant les trois modules tournants 51-53 tel qu'illustré aux figures 1 et 2, l'organe de commande OC commande, au bout de 3s, une première rotation des modules tournants 51-53, préalablement dans une position face motif MOT orientée vers l'avant du véhicule, d'un angle de 180° autour de leurs axes de rotation OZ respectifs, suivant un premier sens de rotation, pour orienter leurs faces miroir MIR vers l'avant du véhicule.

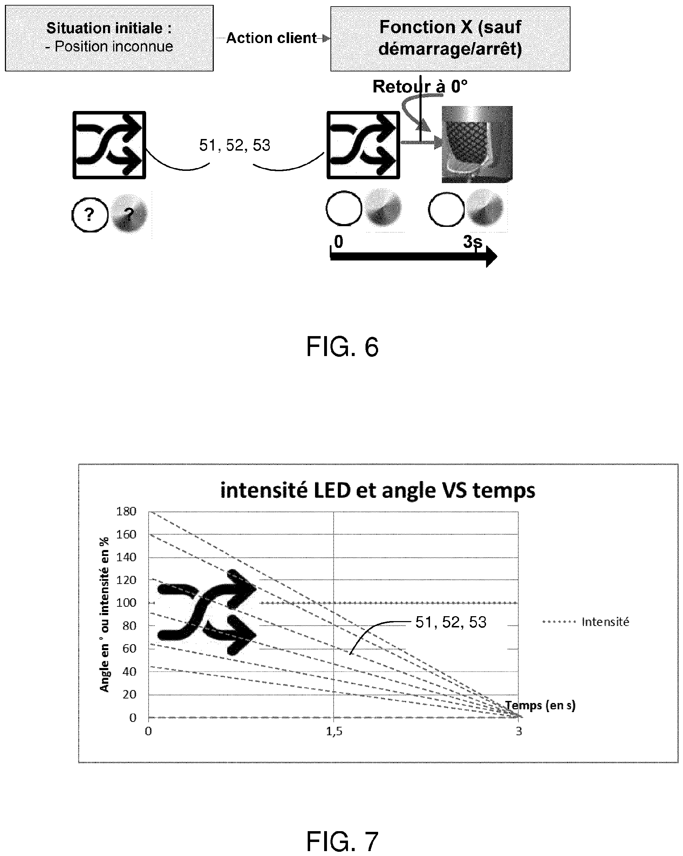

A la fin de la première rotation de 180° dans le premier sens, au bout de 6s (face miroir MIR vers l'avant), l'organe de commande OC commande une succession de trois mini-cycles de rotation de +/- 7° chacun autour de la direction principale (180° en reprenant la convention de la légende illustrée à la figure 6) du faisceau lumineux de lumière blanche généré par la LED 33. Chaque mini-cycle dure 2s soit 6s à l'issue des trois mini-cycles.

Pendant ces 6 secondes, le conducteur, en admettant qu'il a repéré son véhicule dès la première rotation des modules 51-53 passant de manière synchrone de l'état de feux éteints à l'état feux allumés, par exemple feux de position allumés, voit une rotation des modules 51-53 toutes les secondes.

Si le conducteur n'avait pas encore identifié son véhicule au début du cycle de T = 15s, son attention sera d'autant plus attirée par la succession des trois mini-cycles.

Au bout des 6s, soit 12s depuis le début de la durée du cycle T, l'organe de commande OC commande une deuxième rotation des premiers modules 51-53 d'un angle de 180° selon le deuxième sens de rotation ; les modules tournants 51-53 présentant à la fin du cycle de durée T = 15s leurs faces motif MOT de manière visible de l'extérieur du véhicule 1.

De manière avantageuse, l'extinction de l'éclairage et/ou de signalisation d'accompagnement correspond à l'extinction progressive ou en « tout ou rien » de l'éclairage d'ambiance intérieur du véhicule 1.

La durée T du cycle peut être réglée à 15s, 30s ou 60s au maximum. La durée T du cycle peut être paramétrée en fonction du souhait du conducteur.

De manière avantageuse, lorsque l'éclairage d'ambiance intérieur du véhicule 1 permet un changement de couleur, alors la couleur du rétro-éclairage par les LEDs RGB 34, change de couleur de manière synchrone avec les mêmes teintes. Ces variations d'intensité et de couleurs des éclairages intérieur et extérieur, de manière synchronisée, renforce l'impact visuel de l'animation d'accompagnement. La palette de couleurs des éclairages intérieur et extérieur peut être définie par le conducteur ou être prédéterminée par défaut dans le calculateur habitacle.

L'animation décrite ci-dessus, prenait comme hypothèse que les modules tournants 51-53 étaient orientés avec les faces motif MOT vers l'avant du véhicule 1 suivant l'axe longitudinal du véhicule lorsque la commande de la fonction est reçu par l'organe OC de commande du véhicule 1.

Cependant, il est possible qu'une autre animation soit déjà en cours de déploiement et que l'angle du module tournant 51-52 soit dans une situation initiale dans laquelle la position des modules tournants 51-53 est inconnue, comprise entre 0° et 180° avec activation ou pas des sources de lumière blanche et/ou colorée tel qu'illustré à la figure 6.

Pour tenir compte de cette position aléatoire des modules tournants 51-53, la loi de commande, telle qu'illustrée à la figure 7, prévoit un temps ou délai de repositionnement de 3s au début de chaque cycle afin que les projecteurs tournants 51-53 prennent leurs positions face motif MOT (0°) orientée suivant l'axe du véhicule 1 avant d'initier réellement leur animation.

Pendant ces 3s les sources de lumière blanche et colorée sont activées avec une intensité lumineuse constante, par exemple maximale (100%)

Cette animation visuelle peut s'intégrer dans une fonction d'éclairage et/ou de signalisation générale dite « d'accueil » qui se décline sous la forme de différentes mises en scènes de l'éclairage et/ou de la signalisation du véhicule 1 à destination du conducteur et des passagers du véhicule 1.

Ces mises en scène mettent notamment en jeu les moyens d'éclairage et/ou de signalisation extérieurs et des moyens d'éclairage intérieurs du véhicule 1 ; moyens qui peuvent par ailleurs participer à des ambiances visuelles entrant dans des ambiances « polysensorielles » personnalisables, en coopération avec d'autres organes ou équipements du véhicule.

## Revendications

1. Dispositif d'éclairage et/ou de signalisation d'un véhicule automobile (1), apte à illuminer une zone (ZA) s'étendant autour du véhicule (1), comportant au moins une première source de lumière blanche (33) associée à au moins un premier (51) module d'éclairage et/ou de signalisation tournant, apte à générer un faisceau lumineux (40) suivant des directions déterminées, un organe de commande (OC) apte à commander la rotation et l'intensité lumineuse du premier (51) module tournant, le premier (51) module tournant présentant une première face (MIR) et une deuxième face (MOT) opposée à la première : la première face (MIR) comportant une surface réfléchissante (37) apte à orienter le faisceau lumineux (40) émis par la première source de lumière blanche (33) vers ladite zone (ZA) et la deuxième face (MOT) supportant un motif; **caractérisé en ce que** ledit organe de commande (OC) est couplé à un dispositif de gestion d'accès au véhicule (GAV), ledit organe de commande (OC) commandant la rotation du premier module tournant (51) avec une première vitesse de rotation, à la suite d'une détection d'un signal de commande reçu par le dispositif de gestion d'accès au véhicule (GAV), ladite détection initiant un cycle d'animation de durée déterminée (T), pour orienter la première face (MIR) du premier module tournant (51) vers ladite zone (ZA) ; ledit organe de commande (OC) commandant ensuite le premier module (51) par une succession d'au moins deux rotations, dans un sens puis dans l'autre, du premier module tournant (51) avec une deuxième vitesse de rotation inférieure à la première vitesse de rotation avec une intensité lumineuse de la première source de lumière blanche (33) déterminée en fonction du temps ; ledit organe de commande (OC) commandant le premier module (51), avant la fin du cycle de durée déterminée (T) pour présenter sa deuxième face (MOT) de manière visible de l'extérieur du véhicule (1) à la fin du cycle de durée déterminée (T).

2. Dispositif selon la revendication 1, **caractérisé en ce qu'**il comporte en outre au moins un deuxième module tournant (52), ; l'organe de commande (OC) commandant, de manière synchrone, les rotations de chaque premier et deuxième modules tournants (51, 52).

3. Dispositif selon l'une des revendications 1 ou 2, **caractérisé en ce qu'**il comporte au moins une deuxième source de lumière (34) apte à générer un faisceau lumineux (39) en direction de la deuxième face (MOT) des premier et deuxième modules tournants (51, 52) ; ladite source de lumière (34) étant apte à générer une lumière à couleur changeante.

4. Projecteur (2) de véhicule (1) automobile comportant un boitier (21), **caractérisé en ce que** ledit boitier (21) supporte à rotation des modules tournants (51, 52) d'un dispositif selon l'une des revendications précédentes.

5. Procédé de commande d'un dispositif d'éclairage et/ou de signalisation selon l'une des revendications 1 à 3, **caractérisé en ce qu'**il consiste en début du cycle d'animation de durée déterminée (T) à commander une première rotation du au moins premier module tournant (51) d'un angle d'au moins 180° autour de son axe de rotation (OZ) suivant un premier sens de rotation avec une première vitesse de rotation, puis à la fin de la première rotation du premier module tournant (51), à commander une succession d'au moins deux rotations, dans un sens puis dans l'autre, du premier module tournant (51) avec une deuxième vitesse de rotation inférieure à la première, et à commander une deuxième rotation du au moins premier module (51) d'un angle d'au moins 180° selon un deuxième sens de rotation, opposé au premier sens de rotation et avec la même première vitesse de rotation quand le premier module (51) a terminé sa succession de deux rotations ; le premier module tournant (51) présentant à la fin du cycle de durée (T) sa deuxième face (MOT) de manière visible de l'extérieur du véhicule (1).

6. Procédé selon la revendication précédente, **caractérisé en ce qu'**il consiste à commander une diminution progressive de l'intensité de l'éclairage et/ou de signalisation à la fin de la période (T) déterminée.

7. Procédé selon la revendication précédente, **caractérisé en ce qu'**il consiste à commander une diminution progressive de l'intensité de l'éclairage et/ou de signalisation à la fin de la période (T) déterminée, en fonction de la diminution progressive de l'intensité de l'éclairage d'ambiance intérieur du véhicule (1).

8. Procédé selon l'une quelconque des revendications 5 à 7, **caractérisé en ce qu'**il consiste à commander un changement de couleur de l'éclairage et/ou de signalisation de la au moins deuxième source de lumière (34) en fonction d'un changement de couleur d'un éclairage d'ambiance intérieur du véhicule (1).

## Patentansprüche

1. Beleuchtungs- und/oder Signalgebungsvorrichtung für ein Kraftfahrzeug (1), die geeignet ist, eine Zone (ZA) zu beleuchten, die sich um das Fahrzeug (1) herum erstreckt, mit wenigstens einer ersten weißen Lichtquelle (33), die wenigstens einem ersten (51) drehbaren Beleuchtungs- und/oder Signalgebungsmodul zugeordnet ist, das geeignet ist, einen Lichtstrahl (40) in bestimmten Richtungen zu erzeugen, einem Steuerorgan (OC), das geeignet ist, die Drehung und die Lichtintensität des ersten (51) drehbaren Moduls zu steuern, wobei das erste (51) drehbare Modul eine erste Fläche (MIR) und eine der ersten gegenüberliegende zweite Fläche (MOT) aufweist: wobei die erste Fläche (MIR) eine reflektierende Oberfläche (37) aufweist, die in der Lage ist, den von der ersten Weißlichtquelle (33) emittierten Lichtstrahl (40) zu der Zone (ZA) zu lenken, und die zweite Fläche (MOT) ein Muster trägt; **dadurch gekennzeichnet, dass** die Steuereinheit (OC) mit einer Vorrichtung (GAV) zur Verwaltung der Einfahrt des Fahrzeugs gekoppelt ist, wobei die Steuereinheit (OC) die Drehung des ersten Drehmoduls (51) mit einer ersten Drehgeschwindigkeit nach der Erfassung eines von der Vorrichtung (GAV) zur Verwaltung der Einfahrt des Fahrzeugs empfangenen Steuersignals steuert, wobei die Erfassung einen Animationszyklus von fester Dauer (T) auslöst, um die erste Fläche (MIR) des ersten Drehmoduls (51) in Richtung der Zone (ZA) auszurichten; wobei die Steuereinheit (OC) dann das erste Modul (51) durch eine Folge von mindestens zwei Umdrehungen des ersten rotierenden Moduls (51) in einer Richtung und dann in der anderen Richtung mit einer zweiten Drehgeschwindigkeit steuert, die niedriger als die erste Drehgeschwindigkeit ist, wobei die Lichtintensität der ersten Weißlichtquelle (33) als Funktion der Zeit bestimmt wird; wobei das Steuerelement (OC) das erste Modul (51) vor dem Ende des Zyklus von bestimmter Dauer (T) steuert, um seine zweite Fläche (MOT) am Ende des Zyklus von bestimmter Dauer (T) in einer von außerhalb des Fahrzeugs (1) sichtbaren Weise darzustellen.

2. Vorrichtung nach Anspruch 1, **dadurch gekennzeichnet, dass** sie außerdem mindestens ein zweites rotierendes Modul (52) umfasst; das Steuerorgan (OC) steuert synchron die Drehungen jedes ersten und zweiten rotierenden Moduls (51, 52).

3. Vorrichtung nach einem der Ansprüche 1 oder 2, **dadurch gekennzeichnet, dass** sie mindestens eine zweite Lichtquelle (34) aufweist, die in der Lage ist, einen Lichtstrahl (39) in Richtung der zweiten Fläche (MOT) des ersten und zweiten Drehmoduls (51, 52) zu erzeugen; wobei die Lichtquelle (34) in der Lage ist, Licht mit wechselnder Farbe zu erzeugen.

4. Scheinwerfer (2) für Kraftfahrzeuge (1) mit einem Gehäuse (21), **dadurch gekennzeichnet, dass** das Gehäuse (21) Drehmodule (51, 52) einer Vorrichtung nach einem der vorstehenden Ansprüche drehbar trägt.

5. Verfahren zur Steuerung einer Beleuchtungs- und/oder Signalgebungsvorrichtung nach einem der Ansprüche 1 bis 3, **dadurch gekennzeichnet, dass** es darin besteht, zu Beginn des Animationszyklus von gegebener Dauer (T) eine erste Drehung des mindestens ersten Drehmoduls (51) um einen Winkel von mindestens 180° um seine Drehachse (OZ) in einer ersten Drehrichtung mit einer ersten Drehgeschwindigkeit und dann am Ende der ersten Drehung des ersten Drehmoduls (51) zu steuern, eine Folge von mindestens zwei Umdrehungen des ersten Drehmoduls (51) in einer Richtung und dann in der anderen mit einer zweiten Drehgeschwindigkeit, die niedriger als die erste ist, zu steuern, und eine zweite Umdrehung des mindestens ersten Moduls (51) um einen Winkel von mindestens 180° gemäß einer zweiten Drehrichtung zu steuern, die der ersten Drehrichtung entgegengesetzt ist und die gleiche erste Drehgeschwindigkeit hat, wenn das erste Modul (51) seine Folge von zwei Umdrehungen beendet hat; wobei das erste Drehmodul (51) am Ende des Dauerzyklus (T) seine zweite Seite (MOT) in einer von der Außenseite des Fahrzeugs (1) sichtbaren Weise präsentiert.

6. Verfahren nach dem vorhergehenden Anspruch, **dadurch gekennzeichnet, dass** es darin besteht, eine progressive Verringerung der Intensität der Beleuchtung und/oder der Signalgebungsvorrichtung am Ende der festgelegten Dauer (T) zu steuern.

7. Verfahren nach dem vorhergehenden Anspruch, **dadurch gekennzeichnet, daß** es darin besteht, eine allmähliche Verringerung der Beleuchtungs- und/oder Signalgebungsintensität am Ende des festgelegten Zeitraums (T) in Abhängigkeit von der allmählichen Verringerung der Intensität der Umgebungsbeleuchtung im Inneren des Fahrzeugs (1) zu steuern.

8. Verfahren nach einem der Ansprüche 5 bis 7, **dadurch gekennzeichnet, dass** es darin besteht, eine Änderung der Farbe der Beleuchtung und/oder Signalgebungsvorrichtung der mindestens zweiten Lichtquelle (34) in Abhängigkeit von einer Änderung der Farbe der inneren Umgebungsbeleuchtung des Fahrzeugs (1) zu steuern.

## Claims

1. Lighting and/or signalling device for a motor vehicle (1), able to illuminate a zone (ZA) extending around the vehicle (1), comprising at least a first white light source (33) associated with at least a first (51) rotating lighting and/or signalling module, capable of generating a light beam (40) in determined directions, a control member (OC) capable of controlling the rotation and the light intensity of the first (51) rotating module, the first (51) rotating module having a first face (MIR) and a second face (MOT) opposite the first: the first face (MIR) comprising a reflecting surface (37) capable of directing the light beam (40) emitted by the first white light source (33) towards said zone (ZA) and the second face (MOT) supporting a pattern ; **characterised in that** said control unit (OC) is coupled to a vehicle access management device (GAV), said control unit (OC) controlling the rotation of the first rotating module (51) with a first speed of rotation, following detection of a control signal received by the vehicle access management device (GAV), said detection initiating an animation cycle of fixed duration (T) to orient the first face (MIR) of the first rotating module (51) towards said zone (ZA); said control unit (OC) then controlling the first module (51) by a succession of at least two rotations, in one direction then in the other, of the first rotating module (51) with a second speed of rotation lower than the first speed of rotation with a luminous intensity of the first white light source (33) determined as a function of time; said control member (OC) controlling the first module (51), before the end of the cycle of determined duration (T), to present its second face (MOT) in a manner visible from the outside of the vehicle (1) at the end of the cycle of determined duration (T).

2. The device according to claim 1, **characterised in that** it also comprises at least one second rotating module (52); the control member (OC) controlling, in a synchronous manner, the rotations of each first and second rotating module (51, 52).

3. Device according to one of claims 1 or 2, **characterised in that** it comprises at least one second light source (34) capable of generating a light beam (39) in the direction of the second face (MOT) of the first and second rotating modules (51, 52); the said light source (34) being capable of generating light with a changing colour.

4. Motor vehicle (1) headlight (2) comprising a housing (21), **characterised in that** said housing (21) rotatably supports rotary modules (51, 52) of a device according to one of the preceding claims.

5. A method of controlling a lighting and/or signalling device according to one of claims 1 to 3, **characterised in that** it consists at the beginning of the animation cycle of given duration (T) in controlling a first rotation of the at least first rotating module (51) by an angle of at least 180° about its axis of rotation (OZ) in a first direction of rotation with a first speed of rotation, then at the end of the first rotation of the first rotating module (51), to control a succession of at least two rotations, in one direction then in the other, of the first rotating module (51) with a second speed of rotation lower than the first, and to control a second rotation of the at least first module (51) by an angle of at least 180° according to a second direction of rotation, opposite to the first direction of rotation and with the same first speed of rotation when the first module (51) has completed its succession of two rotations; the first rotating module (51) presenting at the end of the duration cycle (T) its second face (MOT) in a manner visible from the outside of the vehicle (1).

6. Process according to the previous claim, **characterised in that** it consists of controlling a progressive reduction in the intensity of the lighting and/or signalling at the end of the determined period (T).

7. A method according to the preceding claim, **characterised in that** it consists in controlling a gradual reduction in the intensity of the lighting and/or signalling at the end of the specified period (T), according to the gradual reduction in the intensity of the ambient lighting inside the vehicle (1).

8. A method according to any one of claims 5 to 7, **characterised in that** it consists in controlling a change in the colour of the lighting and/or signalling of the at least second light source (34) as a function of a change in the colour of the interior ambient lighting of the vehicle (1).
